# EUROPÄISCHE PATENTSCHRIFT

(11) **EP 1 227 029 B1**
(45) Veröffentlichungstag und Bekanntmachung des Hinweises auf die Patenterteilung: **04.05.2005**
(21) Anmeldenummer: 02405031.2
(22) Anmeldetag: 21.01.2002
(51) Int. Cl.: B62D 25/14, B62D 27/02

(54) **Verbindungselement für Hohlprofile unterschiedlichen Querschnittes**
Element for connecting hollow profiles of different sections
Elément de liaison pour profilés creux de sections différentes

(30) Priorität: 30.01.2001 DE 10104291; 18.05.2001 DE 10124248
(43) Veröffentlichungstag der Anmeldung: 31.07.2002
(73) Patentinhaber: Alcan Technology & Management AG, 8212 Neuhausen am Rheinfall (CH)
(72) Erfinder: Hein, Jörg, 78256 Steisslingen (DE); Feuerstein, Martin, 78315 Radolfzell (DE); Gallasch, Olaf, 78224 Singen (DE); Traub, Klaus, 88630 Pfullendorf (DE)
(74) Vertreter: Hiebsch, Gerhard F., Dipl.-Ing.

(56) Entgegenhaltungen:
- EP-A- 0 990 578
- WO-A-94/10022
- DE-A- 4 204 826
- DE-A- 19 715 069
- DE-U- 29 916 467
- US-A- 5 931 520

## Beschreibung

Die Erfindung betrifft ein Verbindungselement zum stirnseitigen Verbinden zumindest zweier Hohlprofile unterschiedlichen Querschnittes im Automobilbau nach dem Oberbegriff des Patentanspruches 1.

Solche Verbindungselemente oder Mittelknoten für -- gegebenenfalls aus Abschnittsschalen, bevorzugt Halbschalen, unterschiedlicher Wanddicken zusammengesetzte -- Hohlprofile vor allem rechteckigen Querschnittes sind als Druckgussteile oder als Blech-Formteile bekannt. Derartige Querträger werden auch als Cockpit Carrier bezeichnet und sind zumeist T-förmig ausgebildet mit einem Hohlprofil für die Fahrerseite sowie einem anderen -- auf der anderen Seite des Mittelknotens -- für die Beifahrerseite. Es kann auch noch eine Stützsäule angefügt sein, so dass ein T-förmiger Querträger entsteht.

Die bekannten kastenförmigen, eine Mittelwand und beidseits an diese angeformte, jeweils einen Einschubquerschnitt bildende Rippen aufweisende Mittelknoten werden im Druckgussverfahren ausgeformt -- bzw. aus Blechen geformt und gestanzt -- und führen zu verhältnismäßig hohen Werkzeugkosten; sie bedingen zumeist sehr hohe Nachbearbeitungszeiten. Zudem muss der Mittelknoten für Linkslenker und für Rechtslenker in einem jeweils besonderen Werkzeug hergestellt werden.

Die DE-A-42 04 826 beschreibt einen Wagenkasten für Kraftfahrzeuge, der eine aus Hohlprofilen zusammengesetzte Trägerstruktur umfasst. Um eine Verbindung zwischen wenigstens zwei der Hohlprofile herzustellen, wird in einem gemeinsamen Verbindungsbereich der Hohlprofile ein -- durch einen Abschnitt eines Strangpressprofiles gebildetes -- Verbindungselement nach dem Oberbegriff des Anspruchs 1 angeordnet, an dem die Hohlprofile festgelegt werden. Dieses Zwischenstück ist entweder als Gitter- bzw. Fachwerkstruktur gestaltet oder als Kastenelement von rechtwinkeligem Querschnitt, gegebenenfalls mit einem gebrochenen Eck. Innerhalb dieses als Hohlprofil gestalteten Zwischenstückes sind mehrere Aufnahmeabschnitte angeformt, von denen einer einen rohrförmigen Steckkörper bildet. Zum anderen ist zumindest ein rechteckiger Einschubkörper vorhanden. Diese Aufnahmeabschnitte dienen zum Einschub entsprechend querschnittlich gestalteter Hohlprofile, welche an ein größeres Hohlprofil angeschlossen werden sollen; in letzteres wird das Zwischenstück eingeschoben.

Angesichts dieser Gegebenheiten hat sich der Erfinder das Ziel gesetzt, einen Mittelknoten der eingangs erwähnten Art mit geringen Werkzeugkosten zu erzeugen und dabei die Nachbearbeitung zu vermindern. Zudem wird angestrebt, den Mittelknoten für Linkslenker-Fahrzeuge und Rechtslenker-Fahrzeuge mit dem gleichen Werkzeug herstellen zu können.

Erfindungsgemäß wird an dem auf dem Wege des Strangpressens von Leichtmetall, Kunststoff oder einem anderen strangpressbaren Werkstoff erzeugten Verbindungselement als Mittelknoten für einen Querträger an einem Instrumentenfeld an zwei einander gegenüberliegenden Ecken eines außerhalb einer Rahmenseite vorgesehenen Rahmenbügels jeweils eine Schraubhülse angebracht, welche ebenfalls während des Strangpressens ausgeformt werden kann zur Aufnahme von Verbindungsorganen -- wie Schrauben -- für einen vom Verbindungselement quer zu den Hohlprofilen abragenden Stützarm, um eine Verbindung dieses Mittelknotens mit einem beispielsweise vom Fahrzeugtunnel aufragenden Stützarm zu ermöglichen. Dazu hat es sich als günstig erwiesen, den vom Rahmen umgebenen Steckkörper bevorzugt eine Ecke des Rahmens bilden zu lassen.

Nach einem weiteren bevorzugten Merkmal der Erfindung fluchten des Rahmensbügels Bügelschenkel mit den beiden an sie angrenzenden parallelen Rahmenseiten.

Rahmen und Steckkörper können einen kompakten Presskörper bilden, der von zwei parallelen Ebenen begrenzt ist. Jedoch hat es sich als günstig erwiesen, zumindest den Steckkörper an einer Seite aus dem Rahmen -- die eine der Ebene durchgreifend -- auskragen zu lassen. Im Falle der Anformung eines Rahmenbügels kann von diesem auf der einen Seite der Rahmen auskragen und auf der anderen Seite der Steckkörper.

Insgesamt ergibt sich ein in bestechender Weise die gestellte Aufgabe lösender Mittelknoten für das beschriebene Einsatzgebiet.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Schrägsicht auf einen Querträger mit Stützarm und sogenanntem Mittelknoten als Versteifungselement für einen Personenkraftwagen;
- Fig. 2:: einen vergrößerten Ausschnitt aus Fig. 1;
- Fig. 3, 4:: jeweils einen Querschnitt durch unterschiedliche Ausführungen des Stützarmes;
- Fig. 5:: eine vergrößerte Schrägsicht auf den Mittelknoten der Fig. 1, 2;
- Fig. 6, 10:: Schrägsichten auf eine erste und eine zweite Ausführung von erfindungsgemäßen Verbindungselementen;
- Fig. 7, 11:: vergrößerte Schrägsichten auf die Mittelknoten nach Fig. 6, 10;
- Fig. 8, 9 :: Schrägsichten eines anderen Mittelknotens;
- Fig. 12:: eine Schrägsicht auf eines dritten erfindungsgemäßen Verbindungselement;
- Fig. 13:: eine Stirnansicht des Mittelknotens der Fig. 12;
- Fig. 14:: eine Seitenansicht zu Fig. 12, 13;
- Fig. 15, 18:: Schrägsichten auf zwei andere Mittelknoten;
- Fig. 16, 19:: jeweils eine Stirnansicht der Mittelknoten nach den Fig. 15, 18;
- Fig. 17, 20:: jeweils eine Seitenansicht zu Fig. 16, 19;
- Fig. 21, 22, 23:: Ansichten eines vierten erfindungsgemäßen Verbindungselement.

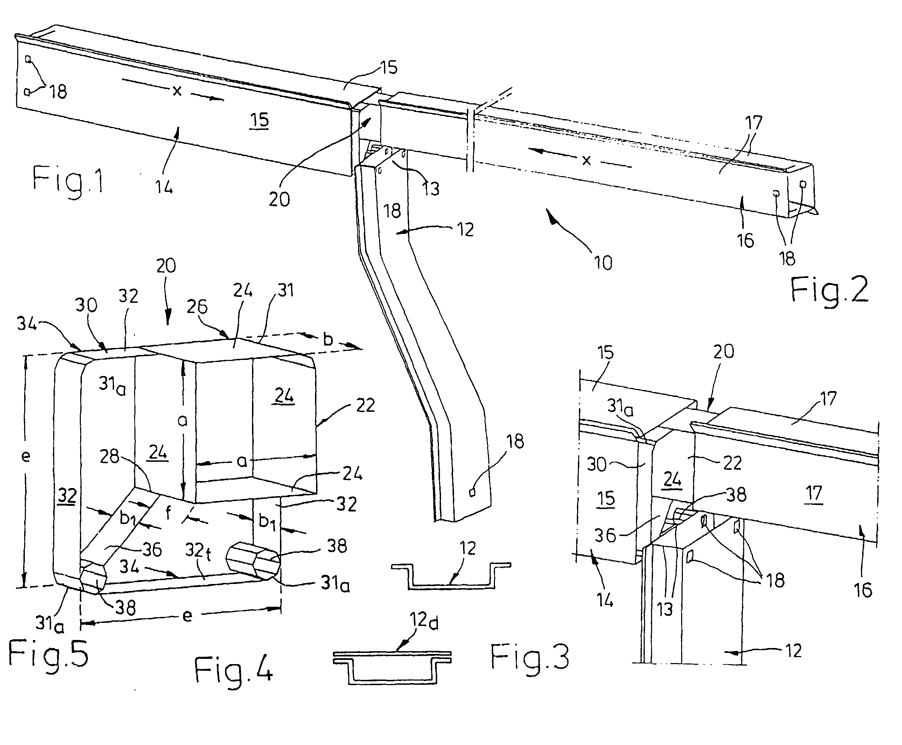

Ein T-förmiger Querträger 10 zum Einbau unter die nicht dargestellte Instrumententafel in einem Personenkraftwagen weist auf einem in Einbaulage vertikalen Stützarm 12 zu dessen Verbindung mit einem dazu rechtwinkeligen -- in Fig. 1 links angeordneten -- Trägerarm 14 für die Fahrerseite und mit einem Trägerarm 16 für die Beifahrerseite einen Mittelknoten 20 als Verbindungsorgan auf. Ein solcher Querträger 10 wird auch als Cockpit Carrier bezeichnet.

Der Mittelknoten 20 dient als Querschnittsübergang von jenem als Hohlprofil etwa quadratischen Querschnitts ausgebildeten fahrerseitigen Trägerarm 14 zu dem mit ihm fluchtenden Trägerarm 16 für die Beifahrerseite. Auch letzterer ist ein Hohlprofil, dessen -- ebenfalls quadratischer --Querschnitt kleiner ist als jener des anderen Trägerarms 14. Zudem ist die Dicke der vier Blechwände 17 des längeren Trägerarm 16 geringer als die Wanddicke der Wände 15 des Trägerarms 14 für die Fahrerseite. Auch diesem Wanddickenübergang soll der Mittelknoten 20 dienen, auf den die Trägerarme 14, 16 in Steckrichtung x aufgeschoben werden.

Der als Stütze zum nicht dargestellten Fahrzeugtunnel ausgebildete Stützarm 12 bietet gemäß Fig. 3 einen einschalig offenen rechteckigen schmalen sowie nach Fig. 4 in Ausführung 12_{d} einen zweischaligen Querschnitt an und ist nahe seiner Oberkante 13 mit Durchbrüchen 18 für Schraub- oder andere Verbindungselemente ausgestattet.

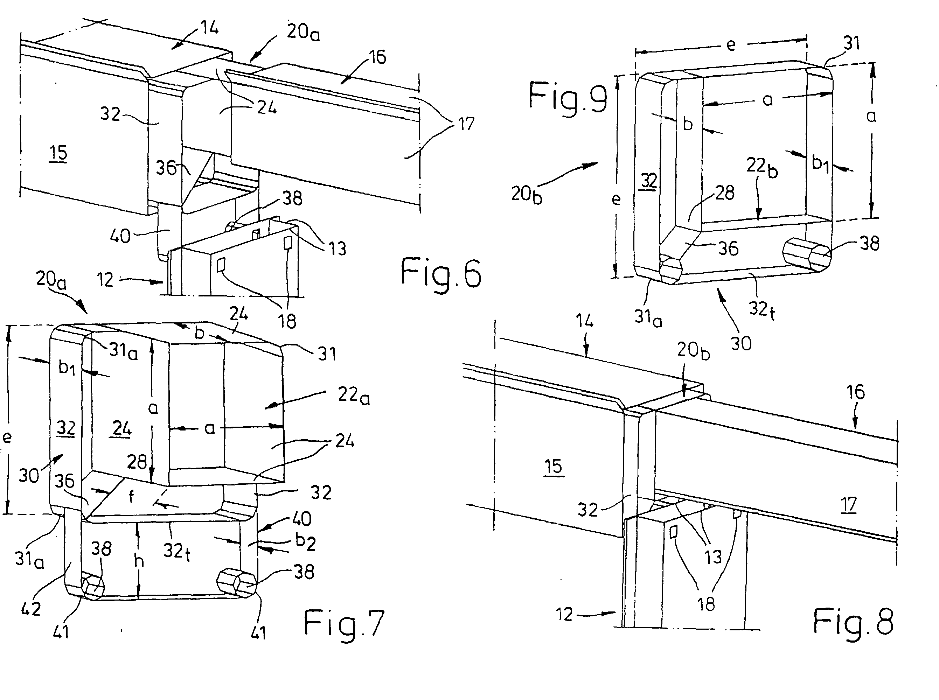

Der Mittelknoten 20 der Fig. 1, 2 und 5 ist auf dem Wege des Strangpressens einstückig aus einer Leichtmetalllegierung hergestellt und weist einen etwa quadratischen Steckkörper 22 der Seitenhöhe a sowie der Breite b auf, dessen Außenkontur der Innenkontur des engeren Trägerarmes 16 -mit geringem Spiel -- entspricht; die Flächen seiner Wandungen 24 sind in Schub- oder Steckrichtung x ausgerichtet. Der Steckkörper 22 ist in einen ebenfalls quadratischen Rahmen 30 der -- etwa halben -- Breite b₁ sowie der -- etwa doppelten -- Seitenhöhe e so integriert, dass jener Steckkörper 22 ein Rahmeneck 31 bildet und zwei der streifenförmigen Rahmenseiten 32 in diesem Rahmeneck 31 in die fluchtenden Körperwandungen 24 übergehen, wobei deren eine -- in Fig. 5 hintere -- Wandkante 26 in die Rahmenkante 34 der jeweiligen Rahmenseite 32 fällt, d.h. der Steckkörper 22 ragt einseitig aus dem Rahmen 30 unter Bildung eines Kragmaßes f heraus; letzteres entspricht etwa der Breite b₁.

An das freie innere Eck 28 des Steckkörpers 22 ist außenseitig ein Diagonalstreifen 36 der Breite b₁ angeformt, der unter Zwischenfügung einer Schraubhülse 38 zu dem benachbarten -- dem oben erwähnten Rahmeneck des Steckkörpers 22 diagonal gegenüberliegenden -- Rahmeneck 31ₐ geführt ist. Die Rahmenecken 31, 31ₐ sind gerundet. Eine zweite Schraubhülse 38 liegt der mit dem Diagonalstreifen 36 verbundenen Schraubhülse 38 im anderen Rahmeneck 31ₐ parallel gegenüber; die beiden Schraubhülsen 38 fluchten in Einbaulage mit den Durchbrüchen 18 an der Oberkante 13 des Stützarmes 12, 12_{d} zur gemeinsamen Aufnahme von Schrauboder Verbindungselementen.

Bei dem ersten erfindungsgemäßen Verbindungselement 20ₐ der Fig. 6, 7 entspricht die Breite b₁ der Rahmenseiten 32 etwa einem Drittel der Breite b der Körperwände 24. Der Diagonalstreifen 36 ist hier unmittelbar an das Rahmeneck 31ₐ angeformt; die Schraubhülsen 30 sind in Ecken 41 eines zusätzlich angeformten U-artigen Rahmenbügels 40 der lichten Höhe h zur unteren Rahmenseite 32ₜ festgelegt. Die beiden parallelen Bügel- oder Seitenschenkel 42 des Rahmenbügels 40 sind an dessen Bodenstreifen 44 angeformt und fluchten mit den seitlichen Rahmenstreifen 32 des Rahmens 30 und ihre in Fig. 7 vorderen Kanten 46 mit den vorderen Rahmenkanten 34. Die Breite b₁ der Rahmenstreifen 32 entspricht etwa der doppelten Breite b₂ des Rahmenbügels 40.

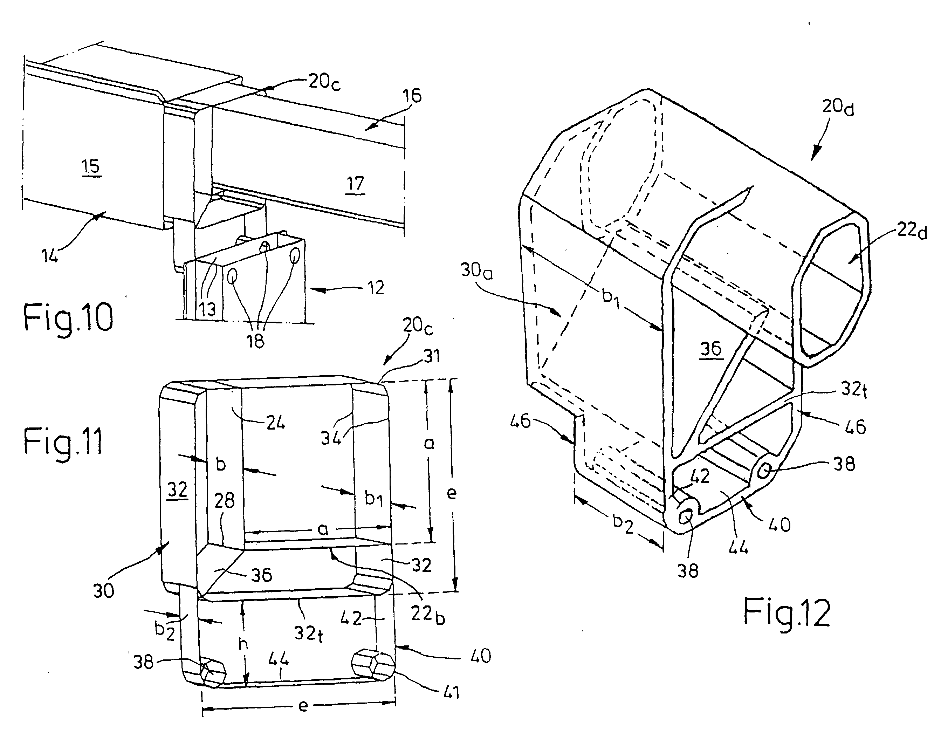

Die Breite b des Steckkörpers 32_{b} im Rahmen 30 der Fig. 8, 9 gleicht dessen Breite b₁; ansonsten ist dieser Mittelknoten 20_{b} entsprechend dem zuerst beschriebenen Mittelknoten 20 ausgeformt. Der zweite erfindungsgemäße Verbindungselement 20_{c} (Fig. 10, 11) entspricht i.w. dem Mittelknoten 20_{b} der Fig. 8, 9 mit zusätzlichem Rahmenbügel 40 in der zu Fig. 7 beschriebenen Ausgestaltung.

Der dritte erfindungsgemäße Verbindungselement 20_{d} der Fig. 12 bis 14 mit einer Gesamthöhe i von etwa 115 mm sowie einer Querlänge e₁ von etwa 70 mm weist eine Wanddicke t von 4 mm auf. Sowohl eine Ecke 31_{b} des Rahmens 30 als auch die diagonale Ecke 41_{b} des Rahmenbügels 40 sind in einem Winkel w von 45° gebrochen. Gleiches gilt für einen Eckbereich 23 des Steckkörpers 22_{d}. Dieser ist an den hier durchgehenden -- im Winkel w₁ von 45° geneigten -- Diagonalstreifen 36ₐ angeformt. Die Gesamtlänge n des Mittelknotens 20_{d} entspricht etwa dessen Seitenkante e von etwa 100 mm, die äußere Höhe a₁ des Steckkörpers 22_{d} hier 55 mm, dessen Breite a₂ 40 mm.

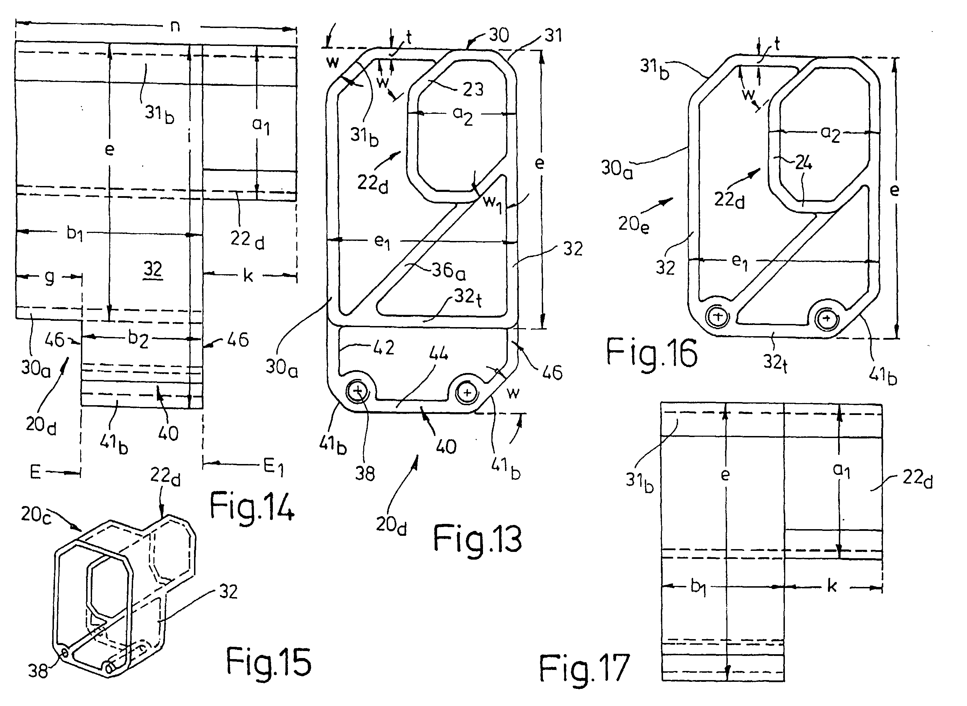

Wie vor allem Fig. 14 verdeutlicht, kragt über die Außenkanten 46 des Rahmenbügels 40 -- bzw. über von diesen bestimmte Ebenen E, E₁ -- einerseits der Rahmen 30 um ein Maß g von etwa 24 mm hinaus, anderseits der Steckkörper 22_{d} mit einem Maß k von 36 mm.

Der Mittelknoten 20ₑ nach Fig. 15 bis 17 entspricht etwa dem Mittelknoten 20_{d} ohne den beschriebenen Rahmenbügel 40.

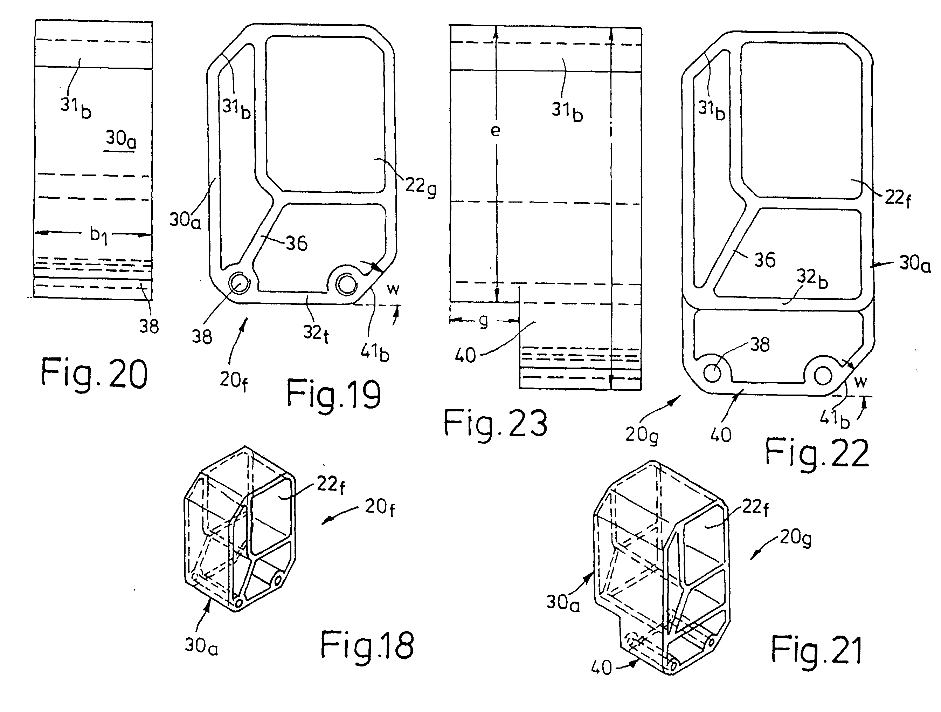

Der Mittelknoten 20_{f} der Fig. 18 bis 20 gleicht etwa dem vorbeschriebenen Mittelknoten 20ₑ, wobei allerdings der querschnittlich i.w. rechteckig gestreckte Steckkörper 22_{f} nicht auskragt; seine Breite entspricht der Breite b₁ des Rahmens 30a.

Bei dem vierten erfindungsgemäßen Verbindungselement der Fig. 21 bis 23 ist an den Rahmen 30ₐ wiederum der Rahmenbügel 40 angeformt, von dem ein Teil des -- den Steckkörper 22_{f} enthaltenden --Rahmens 30ₐ um das Maß g abkragt.

## Patentansprüche

1. Verbindungselement zum stirnseitigen Verbinden zumindest zweier Hohlprofile (14, 16) unterschiedlichen Querschnittes im Automobilbau, das in eines der Hohlprofile formschlüssig einschiebbar und mit einem anderen Hohlprofil durch einen Steckkörper (22ₐ, 22_{b}, 22_{d}, 22_{f}) in Steckrichtung (x) verbindbar ist, wobei letzterer in einem Rahmen (30, 30ₐ) mit in Steckrichtung verlaufenden Rahmenseiten (32, 32ₜ) durch Strangpressen an Abschnitte der Rahmenseiten angeformt sowie gegenüber dem Rahmen von geringerem Querschnitt ist,
**dadurch gekennzeichnet,**
**dass** an dem Verbindungselement als Mittelknoten (20a, 20c, 20d, 20_{g}) für einen Querträger an einem Instrumentenfeld an zwei einander gegenüberliegenden Ecken (41) eines außerhalb einer Rahmenseite (32ₜ) vorgesehenen Rahmenbügels (40) jeweils eine Schraubhülse (38) angebracht, insbesondere angeformt, ist zur Aufnahme von Verbindungsorganen für einen vom Verbindungselement quer zu den Hohlprofilen (14, 16) abragenden Stützarm (12).

2. Verbindungselement nach Anspruch 1, **dadurch gekennzeichnet, dass** der Steckkörper (22ₐ, 22_{b}, 22_{d}, 22_{f}) eine Ecke (31) des Rahmens (30, 30ₐ) bildet.

3. Verbindungselement nach Anspruch 1, **dadurch gekennzeichnet, dass** die am Rahmen (30, 30ₐ) angeformten Bügelschenkel (42) mit parallelen Rahmenseiten fluchten.

4. Verbindungselement nach einem der Ansprüche 1 bis 3, **dadurch gekennzeichnet, dass** der Steckkörper (22ₐ, 22_{d}) in Steckrichtung (x) aus dem Rahmen (30, 30ₐ) einerseits herausragt.

5. Verbindungselement nach einem der Ansprüche 1 bis 4, **dadurch gekennzeichnet, dass** der Rahmen (30, 30ₐ) in Steckrichtung (x) einerseits über eine von einer Außenkante (46) des Rahmenbügels (40) bestimmte Ebene (E) hinausragt.

6. Verbindungselement nach Anspruch 5, **dadurch gekennzeichnet, dass** der Steckkörper (22_{d}) auf der anderen Seite des Rahmenbügels (30ₐ) über eine von dessen anderer Außenkante (96) bestimmte Ebene (E₁) hinausragt.

7. Verbindungselement nach einem der Ansprüche 1 bis 6, **dadurch gekennzeichnet, dass** ein Bodenstreifen (44) des Rahmenbügels (40) parallel zur unteren Rahmenseite (32ₜ) des Rahmens (30, 30ₐ) in Abstand (h) verläuft.

8. Verbindungselement nach Anspruch 7, **dadurch gekennzeichnet, dass** am Bodenstreifen (44) des Rahmenbügels (40) innenseitig an den eckwärtigen Enden in Steckrichtung (x) jeweils eine Schraubhülse (38) angeordnet ist.

9. Verbindungselement nach einem der Ansprüche 1 bis 8, **dadurch gekennzeichnet, dass** zwei Wandungen (24) des Steckkörpers (22ₐ, 22_{b}, 22_{d}, 22_{f}) benachbarte Eckabschnitte des Rahmens (30) bilden.

10. Verbindungselement nach einem der Ansprüche 1 bis 9, **dadurch gekennzeichnet, dass** der einerseits an zwei Rahmenseiten (32) angeformte Steckkörper (22ₐ, 22_{b}, 22_{d}, 22_{f}) anderseits durch einen Diagonalstreifen (36, 36ₐ) mit einem Eckbereich des Rahmens verbunden ist.

11. Verbindungselement nach Anspruch 10, **dadurch gekennzeichnet, dass** der andere Eckbereich (41_{b}) des Rahmenbügels (40) in einem Winkel (w) von 45° gebrochen ist.

12. Querträger mit einem Verbindungselement nach einem der Ansprüche 1 bis 11, **dadurch gekennzeichnet, dass** das als fahrerseitiger Trägerarm (14) eingesetzte Hohlprofil auf den Mittelknoten ausgeschoben ist.

13. Querträger nach Anspruch 12, **dadurch gekennzeichnet, dass** das als mit dem fahrerseitigen Trägerarm (14) fluchtender Trägerarm (16) eingesetzte Hohlprofil dem Steckkörper (22ₐ, 22_{b}, 22_{d}, 22_{f}) zugeordnet ist.

14. Verbindungselement nach einem der Ansprüche 1 bis 11, **dadurch gekennzeichnet, dass** die Breite (b) der Wandung (24) des Steckkörpers der Breite (b₁) der Rahmenseiten (32) entspricht.

15. Verbindungselement nach einem der Ansprüche 1 bis 11, **dadurch gekennzeichnet, dass** die Breite (b) der Wandung (24) des Steckkörpers etwa der doppelten Breite (b₁) der Rahmenseiten (32) entspricht.

16. Verbindungselement nach einem der Ansprüche 1 bis 11, **dadurch gekennzeichnet, dass** die Breite (b₂) des Rahmenbügels (40) etwa der halben Breite (b₁) der Rahmenseiten (32) entspricht.

## Claims

1. Connecting element for connecting the ends of at least two hollow sections (14, 16) having different cross sections in car construction, wherein the connecting element can be inserted positively into one of the hollow sections and connected to another hollow section in the direction of insertion (x) by means of an insertion body (22ₐ, 22_{b}, 22_{d}, 22_{f}), the latter being integrally moulded by extrusion with portions of the sides (32, 32ₜ) of a frame (30, 30ₐ) extending in the direction of insertion and having a smaller cross section than the frame, **characterised in that** respective screw-type sleeves (38) are mounted on, in particular integrally moulded with the connecting element serving as a centre node (20ₐ, 20_{c}, 20_{d}, 20_{g}) for the cross member of an instrument panel at two opposing comers (41) of a frame bracket (40) provided outside one side (32ₜ) of the frame in order to receive connecting members for a supporting arm (12) projecting from the connecting element transversely to the hollow sections (14, 16).

2. Connecting element according to claim 1, **characterised in that** the insertion body (22ₐ, 22_{b}, 22_{d}, 22_{f}) forms a comer (31) of the frame (30, 30ₐ).

3. Connecting element according to claim 1, **characterised in that** the legs (42) of the bracket integrally moulded with the frame (30, 30ₐ) are aligned with parallel sides of the frame.

4. Connecting element according to one of claims 1 to 3, **characterised in that** the insertion body (22ₐ, 22_{d}) projects from the frame (30, 30ₐ) on one side in the direction of insertion (x).

5. Connecting element according to one of claims 1 to 4, **characterised in that** the frame (30, 30ₐ) projects on one side in the direction of insertion (x) beyond a plane (E) defined by an outer edge (46) of the frame bracket (40).

6. Connecting element according to claim 5, **characterised in that** the insertion body (22_{d}) projects on the other side of the frame bracket (30ₐ) beyond a plane (E₁) defined by its other outer edge (46).

7. Connecting element according to one of claims 1 to 6, **characterised in that** a bottom strip (44) of the frame bracket (40) extends parallel to the lower side (32ₜ) of the frame (30, 30ₐ) at a distance (h) therefrom.

8. Connecting element according to claim 7, **characterised in that** respective screw-type sleeves (38) are arranged on the bottom strip (44) of the frame bracket (40) on the inner faces of the comer ends in the direction of insertion (x).

9. Connecting element according to one of claims 1 to 8, **characterised in that** two walls (24) of the insertion body (22ₐ, 22_{b}, 22_{d}, 22_{f}) form adjacent comer portions of the frame (30).

10. Connecting element according to one of claims 1 to 9, **characterised in that** the insertion body (22ₐ, 22_{b}, 22_{d}, 22_{f}) integrally moulded with two sides (32) of the frame on one side is connected on the other side to a comer region of the frame by means of a diagonal strip (36, 36ₐ).

11. Connecting element according to claim 10, **characterised in that** the other comer region (41_{b}) of the frame bracket (40) is cut off at an angle (w) of 45°.

12. Cross member comprising a connecting element according to one of claims 1 to 11, **characterised in that** the hollow section inserted as a supporting arm (14) on the driver's side is slipped on to the centre node.

13. Cross member according to claim 12, **characterised in that** the hollow section inserted as a supporting arm (16) aligned with the supporting arm (14) on the driver's side is associated with the insertion body (22ₐ, 22_{b}, 22_{d}, 22_{f}).

14. Connecting element according to one of claims 1 to 11, **characterised in that** the width (b) of the wall (24) of the insertion body corresponds to the width (b₁) of the sides (32) of the frame.

15. Connecting element according to one of claims 1 to 11, **characterised in that** the width (b) of the wall (24) of the insertion body corresponds approximately to twice the width (b₁) of the sides (32) of the frame.

16. Connecting element according to one of claims 1 to 11, **characterised in that** the width (b₂) of the frame bracket (40) corresponds approximately to half the width (b₁) of the sides (32) of the frame.

## Revendications

1. Elément de liaison pour la liaison côté avant d'au moins deux profilés creux (14, 16), de section différente dans la construction automobile, qui peut être introduit par complémentarité de forme dans l'un des profilés creux et peut être relié à un autre profilé creux par un corps emboîtable (22ₐ, 22_{b}, 22_{d}, 22_{f}) dans le sens d'emboîtement (x), ce corps étant formé dans un cadre (30, 30ₐ) avec des côtés du cadre (32, 32ₜ) agencés dans le sens d'emboîtement par extrusion sur des parties des côtés du cadre et étant de section plus petite par rapport au cadre, **caractérisé en ce que** respectivement un manchon à vis (38) est placé, en particulier formé, sur l'élément de liaison comme noeud central (20ₐ, 20_{c}, 20_{d}, 20_{g}) pour une traverse sur un panneau d'instruments sur deux angles (41) se faisant face d'un étrier du cadre (40) prévu à l'extérieur d'un côté du cadre (32ₜ), destiné au logement d'organes de liaison pour un bras support (12) dépassant de l'élément de liaison transversalement aux profilés creux (14, 16).

2. Elément de liaison selon la revendication 1, **caractérisé en ce que** le corps d'emboîtement (22ₐ, 22_{b}, 22_{d}, 22_{f}) forme un angle (31) du cadre (30, 30ₐ).

3. Elément de liaison selon la revendication 1, **caractérisé en ce que** les branches d'étrier (42) formées sur le cadre (30, 30ₐ) sont alignées avec des côtés du cadre parallèles.

4. Elément de liaison selon l'une quelconque des revendications 1 à 3, **caractérisé en ce que** le corps d'emboîtement (22ₐ, 22_{d}) dépasse d'une part dans le sens d'emboîtement (x) du cadre (30, 30ₐ).

5. Elément de liaison selon l'une quelconque des revendications 1 à 4, **caractérisé en ce que** le cadre (30, 30ₐ) dépasse dans le sens d'emboîtement (x) d'une part au moyen d'un plan (E) défini par un bord extérieur (46) de l'étrier du cadre (40).

6. Elément de liaison selon la revendication 5, **caractérisé en ce que** le corps d'emboîtement (22_{d}) dépasse sur l'autre côté de l'étrier du cadre (30ₐ) au moyen d'un plan (E₁) défini par son autre bord extérieur (46).

7. Elément de liaison selon l'une quelconque des revendications 1 à 6, **caractérisé en ce qu'**une bande de fond (44) de l'étrier du cadre (40) est agencée à distance (h) parallèlement à l'autre côté de cadre (32ₜ) du cadre (30, 30ₐ).

8. Elément de liaison selon la revendication 7, **caractérisé en ce que** respectivement un manchon à vis (38) est disposé sur la bande de bord (44) de l'étrier du cadre (40) sur le côté intérieur sur les extrémités côté angle dans le sens d'emboîtement (x).

9. Elément de liaison selon l'une quelconque des revendications 1 à 8, **caractérisé en ce que** deux parois (24) du corps d'emboîtement (22ₐ, 22_{b}, 22_{d}, 22_{f}) forme des parties d'angle voisines du cadre (30).

10. Elément de liaison selon l'une quelconque des revendications 1 à 9, **caractérisé en ce que** le corps d'emboîtement (22ₐ, 22_{b}, 22_{d}, 22_{f}) est formé d'une part sur deux côtés du cadre (32) et relié d'autre part par une bande diagonale (36, 36ₐ) à une zone d'angle du cadre.

11. Elément de liaison selon la revendication 10, **caractérisé en ce que** l'autre zone d'angle (41_{b}) de l'étrier du cadre (40) est cassée dans un angle (w) de 45°.

12. Traverse avec un élément de liaison selon l'une quelconque des revendications 1 à 11, **caractérisé en ce que** le profilé creux inséré comme bras support (14) côté conducteur est introduit sur le noeud central.

13. Traverse selon la revendication 12, **caractérisé en ce que** le profilé creux inséré comme bras support (16) aligné avec le bras support (14) côté conducteur est attribué au corps d'emboîtement (22ₐ, 22_{b}, 22_{d}, 22_{f}).

14. Elément de liaison selon l'une quelconque des revendications 1 à 11, **caractérisé en ce que** la largeur (b) de la paroi (24) du corps d'emboîtement correspond à la largeur (b₁) des côtés du cadre (32).

15. Elément de liaison selon l'une quelconque des revendications 1 à 11, **caractérisé en ce que** la largeur (b) de la paroi (24) du corps d'emboîtement correspond à peu près au double de la largeur (b₁) des côtés du cadre (32).

16. Elément de liaison selon l'une quelconque des revendications 1 à 11, **caractérisé en ce que** la largeur (b₂) de l'étrier du cadre (40) correspond à peu près à la demi-largeur (b₁) des côtés du cadre (32).
